# EUROPÄISCHE PATENTSCHRIFT

(11) **EP 2 334 690 B1**
(45) Veröffentlichungstag und Bekanntmachung des Hinweises auf die Patenterteilung: **25.07.2012**
(21) Anmeldenummer: 09783476.6
(22) Anmeldetag: 28.09.2009
(51) Int. Cl.: C07F 7/18

(54) **VERFAHREN ZUR DARSTELLUNG VON (METH-)ACRYLSILANEN**
METHOD FOR PRODUCING (METH)ACRYLOSILANES
PROCÉDÉ DE PRÉPARATION DE (MÉTH-)ACRYLSILANES

(30) Priorität: 08.10.2008 DE 102008042679
(43) Veröffentlichungstag der Anmeldung: 22.06.2011
(73) Patentinhaber: Wacker Chemie AG, 81737 München (DE)
(72) Erfinder: STANJEK, Volker, 84539 Ampfing (DE); ZICHE, Wolfgang, 84489 Burghausen (DE)
(74) Vertreter: Fritz, Helmut
(86) Internationale Anmeldenummer: PCT/EP2009/062517
(87) Internationale Veröffentlichungsnummer: WO 2010/040653

(56) Entgegenhaltungen:
- EP-A- 1 249 454

## Beschreibung

Die vorliegende Erfindung betrifft ein Verfahren zur Herstellung von Acryl- und Methacrylsilanen mit hohen Reaktionsgeschwindigkeiten und Raum-Zeit-Ausbeuten.

Acryl- und Methacrylsilane finden weitverbreitete Anwendung als Haftvermittler zwischen anorganischen und organischen Materialien, so z. B. in Schlichten für Glasfasern oder bei der Herstellung von "artificial Marmor", als Quervernetzer in organischen Polymeren, z.B. in Lacken, oder auch zur Behandlung von Füllstoffen.

Es sind verschiedene Verfahren zur Herstellung derartiger Verbindungen bekannt. So werden beispielsweise in DE 2851456 oder DE 3832621 edelmetall-katalysierte Hydrosilylierungen beschrieben, bei denen Si-H-haltige Verbindungen an Allyl-(meth-)acrylate addiert werden. Nachteilig an diesen Verfahren ist jedoch die Tatsache, dass dabei entweder z.T. hochtoxische Alkoxysilane wie z.B. Trimethoxysilan eingesetzt werden müssen, oder dass - wenn die entsprechenden Chlorsilane wie z.B. Trichlorsilan verwendet werden - ein zusätzlicher Alkoholyseschritt erforderlich ist. Letzterer ist insbesondere ob der damit verbundenen zusätzlichen Temperaturbelastung der zu Polymerisationen neigenden (Meth-)Acrylsilane äußerst unerwünscht. Zudem lassen sich mit dieser Syntheseroute nur (Meth-)Acrylsilane darstellen, deren Spacer zwischen der Silyl- und der (Meth-)Acrylgruppe über mindestens 3 Kohlenstoffatome verfügt. Die auf Grund ihrer hohen Hydrolysereaktivität besonders interessanten α-(Meth-)Acryloxymethyl-alkoxysilane sind auf diesem Weg nicht zugänglich.

Daher sind Herstellverfahren günstiger und auch gängiger, bei denen die (Meth-)Acrylsilane durch eine Reaktion von Chloralkylsilanen mit Alkalimetall-(Meth)-Acrylaten hergestellt werden. Zur Beschleunigung der heterogenen Reaktion wird dabei der Reaktionsmischung oftmals noch ein Phasentransferkatalysator zugesetzt. Derartige Verfahren sind beispielsweise in EP 0437653, EP 1249454 oder WO 2007/063011 beschrieben.

Allerdings ist die Reaktionsgeschwindigkeit derartiger heterogener Reaktionen auch bei Zusatz eines PhasentransferKatalysators oftmals nur moderat. D.h. es werden Reaktionszeiten von mehreren Stunden und hohe Reaktionstemperaturen von typischerweise 70-120 °C benötigt, um einen weitgehend vollständigen Umsatz zu erreichen.

Dies ist insofern problematisch, da die Reaktionsprodukte polymerisationsempfindlich sind - insbesondere in Hinblick auf eine radikalische Polymerisation. Da die Polymerisation von (Meth-)Acrylaten stark exotherm ist und ihre Geschwindigkeit mit zunehmender Temperatur starkt zunimmt, stellt die Gefahr einer "durchgehenden" Polymerisation ein äußerst ernstzunehmendes Sicherheitsrisiko dar. Zudem führt auch die Polymerisation von nur geringen Produktanteilen zu Ausbeuteverlusten und kann - spätestens bei einer destillativen Aufreinigung, bei der sich die entstandenen Polymere im Destillationssumpf anreichern - zu polymeren Ablagerungen führen, die sich nur schwer wieder beseitigen lassen und einen Produktionsprozess empfindlich stören können.

Zwar kann die radikalische Polymerisation durch die Zugabe von Radikalfängern, wie sie in zahlreichen Patenten, z.B. in EP 0 520 477, beschrieben werden, unterdrückt werden. Jedoch ist die Wirksamkeit derartiger Maßnahmen zeitlich begrenzt, da der Radikalfänger beim Entfalten seiner Wirkung verbraucht wird.

Gleichzeitig ist anzustreben, die Mengen der eingesetzten Radikalfänger auf ein Minimum zu begrenzen. Dies begründet sich nicht nur aus den hohen Preisen für diese Materialien, sondern vor allem in der Tatsache, dass auch die Radikalfänger und ihre Abbauprodukte letzten Endes Verunreinigungen darstellen und als solche auch unerwünschte Eigenschaften entfalten können. So führen viele Stabilisatoren wie auch die in EP 0 520 477 beschriebenen Radikalfänger beispielsweise zu Verfärbungen. Schließlich beeinflussen sie das Polymerisationsverhalten selbstverständlich auch dann, wenn die (Meth-)Acrylsilane letzen Endes gezielt polymerisiert bzw. copolymerisiert werden sollen. Diese Beeinflussung, die auch die Eigenschaften des polymeren Endproduktes, z.B. mittlere Kettenlängen oder Kettenlängenverteilungen betreffen kann, ist in der Regel unerwünscht.

Daher sind Syntheseverfahren zu bevorzugen, bei denen die Reaktion in möglichst kurzer Zeit bei möglichst niedrigen Temperaturen abläuft. Dies gilt umso mehr, als dass die (Meth-) Acrylsilane nicht nur bei ihrer Synthese sondern ebenso bei der meist destillativen Aufreinigung thermisch belastet werden. Die Gesamtbelastung sollte somit auf das absolut unvermeidliche Minimum begrenzt werden.

Aufgabe der vorliegenden Erfindung war deshalb eine Verbesserung der bestehenden Verfahren zur Herstellung von Acryl- oder Methacrylsilanen, die es erlaubt, die entsprechenden Produkte in gleichbleibender Qualität aber bei niedrigeren Temperaturen und/oder kürzeren Reaktionszeiten darzustellen.

Gegenstand der Erfindung ist ein Verfahren zur Herstellung von Silanen (S) der allgemeinen Formel (1)

(R^{1'})₂C=C(R¹)C(O)O-(R²)-Si(R³)_{z}(OR⁴)_{3-z} (1)

ausgehend von einem Halogenalkylsilan (S1) der allgemeinen Formel (2)

X-(R²)-Si(R³)_{z}(OR⁴)_{3-z} (2),

und einem Salz (S2) einer ungesättigten organischen Carbonsäure der allgemeinen Formel (3)

M^{w+} [(R^{1'})₂C=C(R¹)C(C)O⁻]_{w} (3),

wobei
- **R¹**, **R^{1'}**: unabhängig voneinander jeweils ein Wasserstoffatom oder einen linearen oder verzweigten Kohlenwasserstoffrest mit 1-10 Kohlenstoffatomen,
- **R²**: einen linearen oder verzweigten Kohlenwasserstoffrest mit 1-40 Kohlenstoffatomen, der ein oder mehrere Heteroatome, ausgewählt aus den Elementen Stickstoff, Sauerstoff, Schwefel oder Phosphor, enthalten kann,
- **R³** und **R⁴**: unabhängig voneinander lineare oder verzweigte Kohlenwasserstoffreste mit 1-10 Kohlenstoffatomen,
- **X**: ein Halogenatom und
- **M^{w+}**: ein Alkali oder Erdalkalimetallion darstellt und
- **w**: entsprechend der Wertigkeit von **M^{w+}** die Werte 1 oder 2 und
- **z**: die Werte 0, 1 oder 2 annehmen kann,
bei dem vor oder während der Reaktion der Komponenten (S1) und (S2) eine oder mehrere Komponenten (L) mit einem Siedepunkt, der unterhalb des Siedepunktes des Halogenalkylsilans (S1) liegt, destillativ aus der Reaktionsmischung, Teilmischung oder einzelnen Eduktkomponenten zumindest teilweise entfernt wird.

Der Erfindung liegt die überraschende Entdeckung zugrunde, dass die Geschwindigkeit der Reaktion der Komponenten (S1) und (S2) durch die destillative Entfernung der Leichtsieder (L) aus dem Reaktionsgemisch signifikant beschleunigen lässt. Dies führt zu höheren Raum-Zeit-Ausbeuten.

In den allgemeinen Formeln (1) bis (3) stehen **R¹** und **R^{1'}** vorzugsweise für Wasserstoff oder Alkylreste mit 1-3 Kohlenstoffatomen, insbesondere CH₃; **R²** vorzugsweise für einen Alkylrest mit 1-6 Kohlenstoffatomen, insbesondere für CH₂- oder (CH₂)₃-Gruppen; **R³** bevorzugt für CH₃ oder Ethylreste; und **R⁴** vorzugsweise für Methyl-, Ethyl-, Propyl- oder Isopropylreste, wobei Methyl- und Ethylreste besonders bevorzugt werden. **X** stellt vorzugsweise Chlor oder Brom, besonders bevorzugt Chlor dar. **M^{w+}** steht bevorzugt für ein Alkalimetallion, ausgewählt aus den Ionen von Li, Na, K, Rb, Cs, wobei Natrium- und insbesondere Kaliumionen besonders bevorzugt werden.

Besonders bevorzugt dient das erfindungsgemäße Verfahren zur Herstellung von Silanen (S), die über Methacryloxy- oder Acryloxyfunktionen verfügen.

Vorzugsweise handelt es sich bei den Komponenten (L), die vor oder während der Reaktion der Komponenten (S1) und (S2) destillativ aus der Reaktionsmischung entfernt werden, und die einen Siedepunkt aufweisen, der unterhalb des Siedepunktes des Halogenalkylsilans (S1) liegt, um Alkohole, Wasser und/oder (Meth-)Acrylsäurespuren. Besonders bevorzugt handelt es sich hier Alkohole, insbesondere um Alkohole (A) der allgemeinen Formel (4)

R⁴OH (4),

wobei **R⁴** dieselbe Bedeutung aufweist, wie sie bei den allgemeinen Formeln (2) und (3) beschrieben ist Der Alkohol (A) der allgemeinen Formel (4) kann dabei sowohl als Verunreinigung des Silans (S1) als auch des Salzes (S2) in die Reaktionsmischung gelangen. Ebenso kann er sich durch eine Umesterung bilden, bei eine OR⁴-Gruppe an der Silanfunktion der Silane (S) oder (S1) durch andere im Salz (S2) enthaltenen protischen Verunreinigungen (z.B. Wasser, (Meth-)Acrylsäure oder andere Alkohole) substituiert wird.

Da die (Meth-)Acrylsalze (S2) meist kleine Mengen an protischen Verunreinigungen, insbesondere (Meth-)Acrylsäure, Wasser und/oder Alkohole, enthalten, führen die o.g. Substitutionsreaktionen an den Silylgruppen der Silane (S) oder (S1) dazu, dass bei einer Reaktionsführung, wie sie im Stand der Technik beschrieben ist, in der Regel gewisse Mengen des Alkohols (A) in der Reaktionsmischung zugegen sind, deren Gehalt durch das erfindungsgemäße Entfernung der Leichtsieder (L) reduziert werden kann, was überraschenderweise zu dem bereits erwähnten erfindungsgemäßen Effekt führt.

Vorzugsweise sind bei der Reaktion der Komponenten (S1) und (S2) auch noch ein oder mehrere Phasentransferkatalysator(en) (P) sowie ein oder mehrere Stabilisator(en) (St) zugegen. Beispiele für Phasentransferkatalysatoren (P) sind die in EP 0437653, EP 1249454 oder WO 2007/063011 beschriebenen Verbindungen, insbesondere Tetraorganoammonium- oder Tetraorganophosphoniumsalze, z.B. Tetrabutylphosphoniumchlorid, oder -bromid, Butyltributylphosphoniumchlorid oder -bromid, Methyltributylphosphoniumchlorid oder -bromid, Methyltriphenylphosphoniumchlorid. Auch tertiäre Phosphine der allgemeinen Formel (5) können als Phasentransferkatalysatoren (P) verwendet werden

R⁵₃P,

wobei R⁵ gleich oder verschieden sein kann und einen einwertigen, gegebenenfalls substituierten Kohlenwasserstoffrest mit 1-20 Kohlenstoffatomen, der mit Sauerstoffatomen und/oder Stickstoffatomen unterbrochen sein kann, bedeutet. Bevorzugte Phosphine sind beispielsweise Tributylphosphin, Trioctylphosphin oder Triphenylphosphin. Die Phasentransferkatalysatoren (P) werden vorzugsweise in Mengen von 0,1-20 Gew.-%, besonders bevorzugt in Mengen von 1-10 Gew.-% eingesetzt, jeweils bezogen auf die Menge des eingesetzten Silans (S1).

Beispiele für Stabilisatoren (St) sind handelsübliche Verbindungen wie sie z.B. in EP 0 520 477 beschrieben werden. Dabei kann es sich um aromatische Amine, Chinone, Hydrochinone, sterisch gehinderte Phenole oder stabile Radikale wie Phenothazin, Hydrochinon, Hydrochinonmonomethylether, N,N'-Diphenyl-p-phenylendiamin2,6-Di-tert-butyl-phenol, 2,6-Di-tert-butyl-4-methyl-phenol, 2,6-Di-tert-butyl-4 (N,N-dimethylamino)-methyl-phenol, 2,2,,6,6-tetramethyl-piperidyl-N-Oxid oder 3,5-Di-tert--butyl-4-hydroxytoluol. Die Stabilisatoren (St) werden bevorzugt in Mengen von 0,01-1 Gew.-%, besonders bevorzugt in Mengen von 0,05-0,4 Gew.-% eingesetzt, jeweils bezogen auf die Menge des eingesetzten Silans (S1).

Sauerstoff kann dabei als Costabilisator dienen. Aus diesem Grund kann die erfindungsgemäße Reaktion unter Magerluft - d.h. Stickstoff, der 0,1-2% Sauerstoff enthält - durchgeführt werden.

Die Phasentransferkatalysatoren (P) sowie die Stabilisatoren (St) können gegebenenfalls auch als Lösung in einem oder mehreren Lösungsmittel(n) (L1) zugegeben werden. Als Lösungsmittel (L1) können sämtliche Lösungsmittel eingesetzt werden, bevorzugt werden gängige leichtflüchtige Lösungsmittel, z.B. Ketone wie Aceton, Methyletylketon, Methylisobutylketon, Ester wie Etylacetat, Alkohole wie Methanol, Ethanol, Propanol, Butanol, Ether wie THF, Dioxan, Diethylether, Methyl-t-Butylether, Aromaten wie Toluol, Xylol oder Alkane wie Pentan, Hexan, Cyclohexan, Heptan verwendet.

Vorzugsweise werden die Lösungsmittel (L1) bei dem erfindungsgemäßen Verfahren gemeinsam mit den leichtflüchtigen Komponenten (L) entfernt.

In einer bevorzugten Ausführungsform des erfindungsgemäßen Verfahrens zur Herstellung von Silanen (S) der allgemeinen Formel (1) weist dieses die folgenden Verfahrensschritte auf:
- Vorlegen eines Halogenalkylsilans (S1) der allgemeinen Formel (2),
- zumindest teilweise destillative Entfernung eines oder mehrerer Komponenten (L) mit einem Siedepunkt, der unterhalb des Siedepunktes des Halogenalkylsilans (S1) liegt,
- Zugabe eines Salzes (S2) einer ungesättigten organischen Carbonsäure der allgemeinen Formel (3).

Diese Verfahrensschritte werden dabei vorzugsweise in der angegebenen Reihenfolge durchgeführt.

Bevorzugt wird in einem weiteren Verfahrensschritt auch noch ein oder mehrere Phasentransferkatalysator(en) (P) und/oder ein oder mehrere Stabilisator(en) (St) oder aber eine Lösung einer oder mehrerer dieser Komponenten in einem Lösungsmittel (L1) zugegeben. Diese Zugabe kann vor, während oder nach dem Vorlegen des Silan (S1) erfolgen. Ebenso ist es möglich, die Komponenten (P), (St) und/oder (L1) mit dem Halogensilan (S1) vorzumischen und gemeinsam vorzulegen.

Besonders bevorzugt wird eine Lösung von einem oder mehreren Phasentransferkatalysator(en) (P) sowie gegebenenfalls einem oder mehreren Stabilisator(en) (St) in einem Lösungsmittel (L1) vor der (teilweisen) Entfernung des bzw. der leichterflüchtigen Komponente(n) (L) zugegeben, so dass bei diesem Verfahrensschritt das bzw. die Lösungsmittel (L1) ebenfalls ganz oder zumindest teilweise entfernt wird bzw. werden.

Zudem kann die Reaktionsmischung auch noch ein oder mehrere Lösungsmittel enthalten. Vorzugsweise wird die Reaktion jedoch lösungsmittelfrei durchgeführt.

Bei der Durchführung des erfindungsgemäßen Verfahrens werden die Leichtsieder (L) vorzugsweise entfernt, indem nach der Vorlage einzelner oder auch aller Reaktionskomponenten in das Reaktionsgefäß der Druck soweit erniedrigt wird, bis die entsprechende Mischung siedet. Dann werden vorzugsweise 0,1-5 Gew-% der gesamten Reaktionsmischung destillativ entfernt.

Bei einem bevorzugten Verfahren werden die Leichtsieder aus einer Mischung entfernt, die bereits das Silan der allgemeinen Formel (1) und gegebenenfalls auch schon Phasentransferkatalysatoren (P) und/oder Stabilisatoren (St) enthält, aber noch nicht das Salz (S2). Bei einer anderen bevorzugten Variante werden die Leichtsieder (L) entfernt, nachdem auch das (Meth-)Acrylatsalz (S2) ganz oder teilweise hinzugegeben worden ist. Besonders bevorzugt wird ein Destillationsschritt zur Entfernung des bzw. der Leichtsieder (L) vor bzw. zu Beginn der Reaktion, und ein oder mehrere zusätzliche Destillationsschritte auch während der Reaktion durchgeführt. Letzteres ist insbesondere dann sinnvoll, wenn sich während der Reaktion durch die bereits beschriebenen Substitutionen an den Silylgruppen der Silane (S) bzw. (S1) erneut kleine Mengen des Alkohols (A) bilden, z.B. durch die Freisetzung von Wasserspuren aus dem sich auflösenden Salz (S2) und eine daraus resultierende Hydrolysereaktion der Silane (S) oder (S1). Diese Alkoholspuren werden dann durch die zusätzlichen Destillationsschritte entfernt.

Der Gehalt an freiem Alkohol (A) der Formel (4) liegt während der Reaktion der Komponenten (S1) und (S2) bevorzugt unter 4 Gew.-% insbesondere unter 2 Gew.-%, jeweils bezogen auf die gesamte Reaktionsmischung, wobei Werte unter 1,5 bzw. unter 1 Gew.-% besonders bevorzugt werden.

Bei einer bevorzugten Ausführungsform wird die destillative Entfernung der Leichtsieder (L) bei Reaktionstemperatur und/oder während der Aufwärmphase durchgeführt und einzig über den Druck und/oder das Rücklaufverhältnis im Kühler gesteuert. Dies hat den Vorteil, dass keine Zeitverluste durch lange Aufwärm- und Abkühlphasen entstehen.

Vorzugsweise beträgt die Temperatur während der destillativen Entfernung der leichtflüchtigen Komponenten (L) und /oder während der Reaktion des Halogenalkylsilans (S1) der allgemeinen Formel (2) mit dem Salz (S2) einer ungesättigten organischen Carbonsäure der allgemeinen Formel (3) mindestens 60 °C, besonders bevorzugt mindestens 70 °C und vorzugsweise höchstens 150 °C, besonders bevorzugt höchstens 120 °C. Die als Nebenprodukt entstehenden Halogensalze sowie gegebenenfalls vorhandene Reste der (Meth-) Acrylsalze mit Anionen der allgemeinen Formel (4) werden vorzugsweise durch eine Filtration abgetrennt. Anschließend wird das Produkt bevorzugt destillativ aufgereinigt, wobei einer oder auch mehrere Reinigungsschritte durchgeführt werden. Vorzugsweise werden zuerst leichtsiedende Verunreinigungen destillativ abgetrennt. Dies geschieht bevorzugt bei reduziertem Druck und Temperaturen von mindestens 20 °C, besonders bevorzugt mindestens 40 °C und vorzugsweise höchstens 120 °C, besonders bevorzugt höchstens 80 °C.

Anschließend wird gegebenenfalls das Silan (S) der allgemeinen Formel (1) selbst destilliert, wobei auch dieser Destillationsschritt vorzugsweise bei reduziertem Druck durchgeführt wird, so dass die Sumpftemperatur während der Destillation unter 200 °C, vorzugsweise unter 150 °C und besonders bevorzugt unter 130 °C liegt.

Beispiele für ungesättigte Siliciumverbindungen (S) der allgemeinen Formel (1) sind Acrylsilane, wie z. B. Acryloxymethyltrimethoxysilan, Acryloxymethyltriethoxysilan, Acryloxymethyltriphenyloxysilan, Acryloxymethyltriisopropoxysilan, Acryloxymethyltris(2-methoxyethoxy)silan, Acryloxymethyl(methyl)dimethoxysilan, Acryloxymethyl(methyl)diethoxysilan, Acryloxymethyl(methyl)diphenyloxysilan, Acryloxymethyl(methyl)diisopropoxysilan, Acryloxymethyl(methyl)bis(2-methoxyethoxy)silan, Acryloxymethyl(dimethyl)methoxysilan, Acryloxymethyl(dimethyl)ethoxysilan, Acryloxymethyl(dimethyl)phenyloxysilan, Acryloxymethyl(dimethyl)isopropoxysilan, Acryloxymethyl(dimethyl)(2-methoxyethoxy)silan, 3-Acryloxypropyltrimethoxysilan, 3-Acryloxypropyltriethoxysilan, 3-Acryloxypropyltriphenyloxysilan, 3-Acryloxypropyltriisopropoxysilan, 3-Acryloxypropyltris(2-methoxyethoxy)silan, 3-Acryloxypropyl(methyl)dimethoxysilan, 3-Acryloxypropyl(methyl)diethoxysilan, 3-Acryloxypropyl(methyl)diphenyloxysilan, 3-Acryloxypropyl(methyl)diisopropoxysilan, 3-Acryloxypropyl(methyl)bis(2-methoxyethoxy)silan, 3-Acryloxypropyl(dimethyl)methoxysilan, 3-Acryloxypropyl(dimethyl)ethoxysilan, 3-Acryloxypropyl(dimethyl)phenyloxysilan, 3-Acryloxypropyl(dimethyl)isopropoxysilan, 3-Acryloxypropyl(dimethyl)(2-methoxyethoxy)silan oder auch Methacrylsilane wie z. B. Methacryloxymethyltrimethoxysilan, Methacryloxymethyltriethoxysilan, Methacryloxymethyltriphenyloxysilan, Methacryloxymethyltriisopropoxysilan, Methacryloxymethyltris(2-methoxyethoxy)silan, Methacryloxymethyl(methyl)dimethoxysilan, Methacryloxymethyl(methyl)diethoxysilan, Methacryloxymethyl(methyl)diphenyloxysilan, Methacryloxymethyl(methyl)diisopropoxysilan, Methacryloxymethyl(methyl)bis(2-methoxyethoxy)silan, Methacryloxymethyl(dimethyl)methoxysilan, Methacryloxymethyl(dimethyl)ethoxysilan, Methacryloxymethyl(dimethyl)phenyloxysilan, Methacryloxymethyl(dimethyl)isopropoxysilan, Methacryloxymethyl(dimethyl)(2-methoxyethoxy)silan, 3-Methacryloxypropyltrimethoxysilan, 3-Methacryloxypropyltriethoxysilan, 3-Methacryloxypropyltriphenyloxysilan, 3-Methacryloxypropyltriisopropoxysilan, 3-Methacryloxypropyltris(2-methoxyethoxy)silan, 3-Methacryloxypropyl(methyl)dimethoxysilan, 3-Methacryloxypropyl(methyl)diethoxysilan, 3-Methacryloxypropyl(methyl)diphenyloxysilan, 3-Methacryloxypropyl(methyl)diisopropoxysilan, 3-Methacryloxypropyl(methyl)bis(2-methoxyethoxy)silan, 3-Methacryloxypropyl(dimethyl)methoxysilan, 3-Methacryloxypropyl(dimethyl)ethoxysilan, 3-Methacryloxypropyl(dimethyl)phenyloxysilan, 3-Methacryloxypropyl(dimethyl)isopropoxysilan, 3-Methacryloxypropyl(dimethyl)(2-methoxyethoxy)silan.

Beispiele für besonders bevorzugte ungesättigte Organosiliciumverbindungen (S) der allgemeinen Formel (1) sind solche, bei denen R² für eine Methylengruppe steht. Diese Silane zeichnen sich oftmals durch eine besonders hohe Reaktivität und - damit verbunden - durch eine besonders hohe Polymerisationsneigung aus. Insbesondere bevorzugt sind: Acryloxymethyltrimethoxysilan, Acryloxymethyltriethoxysilan, Acryloxymethyl(methyl)dimethoxysilan, Acryloxymethyl(methyl)diethoxysilan, Acryloxymethyl(dimethyl)methoxysilan, Acryloxymethyl(dimethyl)ethoxysilan, Methacryloxymethyltrimethoxysilan, Methacryloxymethyltriethoxysilan, Methacryloxymethyl(methyl)dimethoxysilan, Methacryloxymethyl(methyl)diethoxysilan, Methacryloxymethyl(dimethyl)methoxysilan und Methacryloxymethyl(dimethyl)ethoxysilan.

Alle vorstehenden Symbole der vorstehenden Formeln weisen ihre Bedeutungen jeweils unabhängig voneinander auf. In allen Formeln ist das Siliziumatom vierwertig.

In den folgenden Beispielen und Vergleichsbeispielen sind, falls jeweils nicht anders angegeben, alle Mengen- und Prozentangaben auf das Gewicht bezogen und sämtliche Umsetzungen werden bei einem Druck von 0,10 MPa (abs.) und einer Temperatur von 20°C durchgeführt.

### Beispiel 1:

In einem 500 ml Kolben mit KPG-Rührer, Kühler und Thermometer werden 319,12 g (1,50 mol) Chlormethyl-triethoxysilan vorgelegt und mit 8,85 g Tetrabutylphosphoniumchlorid und 0,15 g Phenothiazin versetzt. Es wird im Ölbad auf 110 °C erwärmt und anschließend werden 195,6 g (1,575 mol) Kaliummethacrylat zugegeben. Am Ende der Zugabe wird der Druck im Reaktionsgefäß auf bis zu 100 mbar erniedrigt, wobei insgesamt ca. 15 g leichtsiedende Komponenten destillativ entfernt werden. Danach wird der Druck wieder auf Atmosphärendruck erhöht. Während der Destillation sowie auch während der gesamten folgenden Reaktion wird die Reaktionstemperatur konstant zwischen 108 und 112 °C gehalten. Nach 1 h Gesamtreaktionszeit (incl. der Destillation zu Beginn der Reaktion) liegt der mittels GC bestimmte Umsatz zu Methacryloxymethyltriethoxysilan bei ca. 82 Mol-%. Nach 2 h liegt der Umsatz bei ca. 92 Mol-%. Nach 4 h ist die Reaktion weitgehend vollständig (d.h. der Gehalt an nicht umgesetzten Chlormethyl-triethoxysilan liegt bei unter 0,5 Mol-%). Der Ethanolgehalt liegt bei allen Proben zwischen 1,2 und 1,5 Mol-% bei leicht steigender Tendenz im Laufe der Reaktion.

Nach der Filtration des entstandenen Kaliumchlorids wird das Produkt mittels eines Laborkurzwegverdampfers destilliert. Dabei wird das Produkt in einer Ausbeute von ca. 94% in einer Reinheit von ca. 98,5% erhalten.

### Beispiel 2:

In einem 500 ml Kolben mit KPG-Rührer, Kühler und Thermometer werden 319,12 g (1,50 mol) Chlormethyl-triethoxysilan vorgelegt und mit 8,85 g Tetrabutylphosphoniumchlorid und 0,15 g Phenothiazin versetzt. Es wird im Ölbad auf 110 °C erwärmt und anschließend werden 195,6 g (1,575 mol) Kaliummethacrylat zugegeben. Am Ende der Zugabe wird der Druck im Reaktionsgefäß auf bis zu 100 mbar erniedrigt, wobei insgesamt ca. 14 g leichtsiedende Komponenten destillativ entfernt werden. Danach wird der Druck wieder auf Atmosphärendruck erhöht. Während der Destillation sowie auch während der gesamten folgenden Reaktion wird die Reaktionstemperatur konstant zwischen 108 und 111°C gehalten. Nach 1 h Gesamtreaktionszeit (incl. der Destillation zu Beginn der Reaktion) liegt der mittels GC bestimmte Umsatz zu Methacryloxymethyltriethoxysilan bei ca. 83 Mol-%. Anschließend wird durch eine erneute Druckerniedrigung erneut ca. 6 g Destillat abgenommen. Nach 2 h sind in der Reaktionsmischung weniger als 0,2 mol-% Edukt vorhanden. Der Ethanolgehalt der 1. Probe nach 1 h liegt bei 1,3 Mol-%, der Ethanolgehalt der 2. Probe nach 2 h bei 0,9 Mol-%.

### Vergleichsbeispiel 1:

Es wird so vorgegangen wie in Beispiel 1, wobei allerdings auf den Destillationsschritt nach Zugabe des Kaliummethacrylates verzichtet wird. Nach 1 h liegt der mittels GC bestimmte Umsatz bei ca. 40 Mol-%. Nach 2 h liegt der Umsatz bei ca. 59 Mol-%. Auch nach 4 h schließlich kann nur ein Umsatz von ca. 81 Mol-% erreicht werden. Der Ethanolgehalt liegt bei allen Proben relativ konstant zwischen 2,0 und 2,1 Mol-%.

### Beispiel 3:

In einem 500 ml Kolben mit KPG-Rührer, Kühler und Thermometer werden 231,98 g (1,50 mol) Chlormethyl-methyldimethoxysilan vorgelegt und mit 8,85 g Tetrabutylphosphoniumchlorid und 0,15 g Phenothiazin versetzt. Es wird im Ölbad auf 90 °C erwärmt und anschließend werden 195,6 g (1,575 mol) Kaliummethacrylat zugegeben. Am Ende der Zugabe wird der Druck im Reaktionsgefäß auf ca. 700 mbar erniedrigt, wobei insgesamt ca. 7,8 g leichtsiedende Komponenten destillativ entfernt werden. Danach wird der Druck wieder auf Atmosphärendruck erhöht. Während der Destillation sowie auch während der gesamten folgenden Reaktion wird die Reaktionstemperatur konstant zwischen 88 und 90 °C gehalten. Nach 1 h Gesamtreaktionszeit (incl. der Destillation zu Beginn der Reaktion) liegt der mittels GC bestimmte Umsatz zu Methacryloxymethyl-methyldimethoxysilan bei ca. 93 Mol-%. Anschließend wird durch eine erneute Druckerniedrigung erneut ca. 4,1 g Destillat abgenommen. Nach 2 h liegt der Umsatz bei ca. 99 Mol-% und nach 3 h sind in der Reaktionsmischung weniger als 0,2 mol-% Edukt vorhanden. Der Methanolgehalt der 1. Probe nach 1 h liegt bei 1,0 Mol-%, der Methanolgehalt in der 2. und 3. Probe nach 2 h bzw. 3 h bei 0,8 Mol-%.

Nach der Filtration des entstandenen Kaliumchlorids wird das Produkt mittels eines Laborkurzwegverdampfers destilliert. Dabei wird das Produkt in einer Ausbeute von ca. 92% in einer Reinheit von ca. 98,2% erhalten.

### Vergleichsbeispiel 2:

Es wird so vorgegangen wie in Beispiel 2, wobei allerdings auf die Destillationsschritte nach Zugabe des Kaliummethacrylates bzw. nach 1 h Reaktionszeit verzichtet wird. Nach 1 h Reaktionszeit liegt der mittels GC bestimmte Umsatz bei ca.75 Mol-%. Nach 2 h liegt der Umsatz bei ca. 85 Mol-%. Nach 3 h schließlich wird ein Umsatz von ca. 93 Mol-% erreicht. Erst nach 4 h liegt der Umsatz mit ca. 97 Mol-% in einer befriedigenden Größenordnung. Der Methanolgehalt liegt bei allen Proben relativ konstant zwischen 1,6 und 1,7 Mol-%.

## Patentansprüche

1. Verfahren zur Herstellung von Silanen (S) der allgemeinen Formel (1)
(R^{1'})₂C=C(R¹)C(O)O-(R²)-Si(R³)_{z}(OR⁴)_{3-z} (1)
ausgehend von einem Halogenalkylsilan (S1) der allgemeinen Formel (2)
X-(R²)-Si(R³)_{z}(OR⁴)_{3-z} (2),
und einem Salz (S2) einer ungesättigten organischen Carbonsäure der allgemeinen Formel (3)
M^{w+} [(R^{1'})₂C=C(R¹)C(O)O⁻]_{w} (3),
wobei
**R¹, R^{1'}** unabhängi**g** voneinander jeweils ein Wasserstoffatom oder einen linearen oder verzweigten Kohlenwasserstoffrest mit 1-10 Kohlenstoffatomen,
**R²** einen linearen oder verzweigten Kohlenwasserstoffrest mit 1-40 Kohlenstoffatomen, der ein oder mehrere Heteroatome, ausgewählt aus den Elementen Stickstoff, Sauerstoff, Schwefel oder Phosphor, enthalten kann,
**R³** und **R⁴** unabhängig voneinander lineare oder verzweigte Kohlenwasserstoffreste mit 1-10 Kohlenstoffatomen,
**X** ein Halogenatom und
**M^{w+}** ein Alkali oder Erdalkalimetallion darstellt und
**w** entsprechend der Wertigkeit von **M^{w+}** die Werte 1 oder 2 und
**z** die Werte 0, 1 oder 2 annehmen kann,
bei dem vor oder während der Reaktion der Komponenten (S1) und (S2) eine oder mehrere Komponenten (L) mit einem Siedepunkt, der unterhalb des Siedepunktes des Halogenalkylsilans (S1) liegt, destillativ aus der Reaktionsmischung, Teilmischung oder einzelnen Eduktkomponenten zumindest teilweise entfernt wird.

2. Verfahren nach Anspruch 1, bei dem R¹ und R^{1'} Wasserstoffatom oder Alkylrest mit 1-3 Kohlenstoffatomen bedeuten.

3. Verfahren nach Anspruch 1 oder 2, bei dem R³ bevorzugt für CH₃ oder Ethylreste bedeutet.

4. Verfahren nach Anspruch 1 bis 3, bei dem X Chlor bedeutet.

5. Verfahren nach Anspruch 1 bis 4, bei dem die Komponenten (L), Alkohole (A) der allgemeinen Formel (4)
R⁴OH (4),
enthalten, wobei **R⁴** dieselbe Bedeutung aufweist, wie sie in Anspruch 1 bei den allgemeinen Formeln (2) und (3) beschrieben ist.

6. Verfahren nach Anspruch 1 bis 5, bei dem mindestens ein Phasentransferkatalysator (P) anwesend ist.

7. Verfahren nach Anspruch 1 bis 6, bei dem die Temperatur während der destillativen Entfernung der leichtflüchtigen Komponenten (L) 60 °C bis 150°C beträgt.

8. Verfahren nach Anspruch 1 bis 7, bei dem die Temperatur während der Reaktion des Halogenalkylsilans (S1) der allgemeinen Formel (2) mit dem Salz (S2) einer ungesättigten organischen Carbonsäure der allgemeinen Formel (3) 60 °C bis 150 °C beträgt.

9. Verfahren nach Anspruch 1 bis 8, welches mindestens die folgenden Verfahrensschritte umfasst
• Vorlegen eines Halogenalkylsilans (S1) der allgemeinen Formel (2),
• zumindest teilweise destillative Entfernung eines oder mehrerer Komponenten (L) mit einem Siedepunkt, der unterhalb des Siedepunktes des Halogenalkylsilans (S1) liegt,
• Zugabe einees Salzes (S2) einer ungesättigten organischen Carbonsäure der allgemeinen Formel (3).

10. Verfahren nach Anspruch 9, bei dem eine Lösung von einem oder mehreren Phasentransferkatalysatoren (P) sowie gegebenenfalls einem oder mehreren Stabilisatoren (St) in einem oder mehreren Lösungsmittel(n) (L1) vor der vollständigen oder teilweisen Entfernung des bzw. der leichterflüchtigen Komponenten (L) zugegeben wird, so dass bei dem letztgenannten Verfahrensschritt das bzw. die Lösungsmittel (L1) ebenfalls ganz oder zumindest teilweise entfernt wird bzw. werden.

11. Verfahren nach Anspruch 1-10, bei dem während der Reaktion der Komponenten (S1) und (S2) der Gehalt an freiem Alkohol (A) der allgemeinen Formel (4)
R⁴OH (4),
wobei **R⁴** dieselbe Bedeutung aufweist, wie sie bei den allgemeinen Formeln (2) und (3) beschrieben ist, unter 4 Gew.-% bezogen auf die gesamte Reaktionsmischung liegt.

## Claims

1. Process for preparing silanes (S) of the general formula (1)
(R^{1'})₂C=C(R¹)C(O)O-(R²)-Si(R³)_{z}(OR⁴)_{3-z} (1)
starting from a haloalkylsilane (S1) of the general formula (2)
X-(R²)-Si(R³)_{z}(OR⁴)_{3-z} (2),
and from a salt (S2) of an unsaturated organic carboxylic acid of the general formula (3)
M^{w+} [(R^{1'})₂C=C(R¹)C(O)O⁻]_{w} (3),
where
**R¹** and **R^{1'}** independently of one another are each a hydrogen atom or a linear or branched hydrocarbon radical having 1-10 carbon atoms,
**R²** is a linear or branched hydrocarbon radical having 1-40 carbon atoms, which may comprise one or more heteroatoms selected from the elements nitrogen, oxygen, sulfur or phosphorus,
**R3** and **R⁴** independently of one another are linear or branched hydrocarbon radicals having 1-10 carbon atoms,
**X** is a halogen atom, and
**M^{w+}** is an alkali or alkaline earth metal ion, and
**w,** corresponding to the valence of **M^{w+}**, may adopt the values 1 or 2, and
**z** may adopt the values 0, 1 or 2,
wherein, before or during the reaction of components (S1) and (S2), one or more components (L) having a boiling point which is below the boiling point of the haloalkylsilane (S1) is or are removed at least partly by distillation from the reaction mixture, partial mixture or individual reactant components.

2. Process according to Claim 1, wherein **R¹** and **R^{1'}** are a hydrogen atom or alkyl radical having 1-3 carbon atoms.

3. Process according to Claim 1 or 2, wherein **R³** is preferably CH₃ or ethyl radicals.

4. Process according to Claim 1 to 3, wherein **X** is chlorine.

5. Process according to Claim 1 to 4, wherein the components (L) comprise alcohols (A) of the general formula (4)
R⁴OH (4),
where **R⁴** has the same definition as described in Claim 1 for the general formulae (2) and (3).

6. Process according to Claim 1 to 5, wherein at least one phase transfer catalyst (P) is present.

7. Process according to Claim 1 to 6, wherein the temperature during the distillative removal of the volatile components (L) is 60°C to 150°C.

8. Process according to Claim 1 to 7, wherein the temperature during the reaction of the haloalkylsilane (S1) of the general formula (2) with the salt (S2) of an unsaturated organic carboxylic acid of the general formula (3) is 60°C to 150°C.

9. Process according to Claim 1 to 8, which comprises at least the following steps:
• initially introducing a haloalkylsilane (S1) of the general formula (2),
• at least partly distillatively removing one or more components (L) having a boiling point which is below the boiling point of the haloalkylsilane (S1),
• adding a salt (S2) of an unsaturated organic carboxylic acid of the general formula (3).

10. Process according to Claim 9, wherein a solution of one or more phase transfer catalysts (P) and also optionally one or more stabilizers (St) in one or more solvents (L1) is added before the complete or partial removal of the more volatile component or components (L), and so, in the last-stated process step, the solvent or solvents (L1) is or are likewise removed wholly or at least partly.

11. Process according to Claim 1-10, wherein, during the reaction of the components (S1) and (S2), the amount of free alcohol (A) of the general formula (4)
R⁴OH (4),
where **R⁴** has the same definition as described for the general formulae (2) and (3), is below 4% by weight, based on the overall reaction mixture.

## Revendications

1. Procédé pour la préparation de silanes (S) de formule générale (1),
(R^{1'})₂C=C(R¹)C(O)O-(R²)-Si(R³)_{z}(OR⁴)_{3-z} (1)
partant d'un halogénoalkylsilane (S1) de formule générale (2)
X-(R²)-Si(R³)_{z}(OR⁴)_{3-z} (2),
et d'un sel (S2) d'un acide carboxylique organique insaturé de formule générale (3)
M^{w+} [(R^{1'})₂C=C(R¹)C(O)O⁻]_{w} (3),
où
R¹, R^{1'} représentent, indépendamment l'un de l'autre, à chaque fois un atome d'hydrogène ou un radical hydrocarboné linéaire ou ramifié, comprenant 1 à 10 atomes de carbone,
R² représente un radical hydrocarboné linéaire ou ramifié, comprenant 1 à 40 atomes de carbone, qui peut contenir un ou plusieurs hétéroatomes, choisis parmi les éléments azote, oxygène, soufre ou phosphore,
R³ et R⁴ représentent, indépendamment l'un de l'autre, des radicaux hydrocarbonés linéaires ou ramifiés comprenant 1 à 10 atomes de carbone,
X représente un atome d'halogène et
M^{w+} représente un ion de métal alcalin ou alcalino-terreux et
w en fonction de la valence de M^{w+} peut valoir 1 ou 2 et
z peut valoir 0, 1 ou 2,
dans lequel, avant ou pendant la réaction des composants (S1) et (S2), un ou plusieurs composants (L) présentant un point d'ébullition qui est inférieur au point d'ébullition de l'halogénoalkylsilane (S1), est/sont éliminé(s) au moins partiellement par distillation du mélange réactionnel, du mélange partiel ou des différents composants de départ.

2. Procédé selon la revendication 1, R¹ et R^{1'} signifiant un atome d'hydrogène ou un radical alkyle comprenant 1-3 atomes de carbone.

3. Procédé selon la revendication 1 ou 2, R³ signifiant de préférence CH₃ ou des radicaux éthyle.

4. Procédé selon les revendications 1 à 3, X signifiant chlore.

5. Procédé selon les revendications 1 à 4, les composants (L) contenant des alcools (A) de formule générale (4)
R⁴OH (4),
R⁴ présentant la même signification que celle décrite dans la revendication 1 pour les formules générales (2) et (3).

6. Procédé selon les revendications 1 à 5, au moins un catalyseur de transfert de phase (P) étant présent.

7. Procédé selon les revendications 1 à 6, la température pendant l'élimination par distillation des composants volatils (L) valant 60°C à 150°C.

8. Procédé selon les revendications 1 à 7, la température pendant la réaction de l'halogénoalkylsilane (S1) de formule générale (2) avec le sel (S2) d'un acide carboxylique organique insaturé de formule générale (3) valant 60°C à 150°C.

9. Procédé selon les revendications 1 à 8, qui comprend au moins les étapes de procédé suivantes :
- disposition préalable d'un halogénoalkylsilane (S1) de formule générale (2)
- élimination au moins partielle par distillation d'un ou de plusieurs composants (L) présentant un point d'ébullition qui est inférieur au point d'ébullition de l'halogénoalkylsilane (S1),
- addition d'un sel (S2) d'un acide carboxylique organique insaturé de formule générale (3).

10. Procédé selon la revendication 9, une solution d'un ou de plusieurs catalyseur(s) de transfert de phase (P) ainsi que le cas échéant d'un ou de plusieurs stabilisateur(s) (St) dans un ou plusieurs solvant(s) (L1) étant ajoutée avant l'élimination complète ou partielle du ou, selon le cas, des composant(s) volatil(s) (L), de manière telle qu'au cours de la dernière étape de procédé mentionnée, le ou les solvant(s) (L1) est/sont également éliminé(s) totalement ou du moins partiellement.

11. Procédé selon les revendications 1-10, la teneur en alcool libre (A) de formule générale (4), pendant la réaction des composants (S1) et (S2),
R⁴OH (4),
R⁴ présentant la même signification que celle décrite pour les formules générales (2) et (3), étant inférieure à 4% en poids par rapport à la totalité du mélange réactionnel.
